# EUROPÄISCHE PATENTSCHRIFT

(11) **EP 3 043 421 B1**
(45) Veröffentlichungstag und Bekanntmachung des Hinweises auf die Patenterteilung: **18.04.2018**
(21) Anmeldenummer: 16150856.9
(22) Anmeldetag: 12.01.2016
(51) Int. Cl.: H01R 13/00, B60L 11/18

(54) **ELEKTROANSCHLUSSKÖRPER FÜR EINEN LADESTECKER UND/ODER EINE LADEBUCHSE, LADESTECKER UND LADESTATION ZUR ABGABE ELEKTRISCHER ENERGIE AN EINEN EMPFÄNGER ELEKTRISCHER ENERGIE**
ELECTRIC CONNECTION BODY FOR A CHARGING CONNECTOR AND/OR A CHARGING SOCKET, CHARGING CONNECTOR AND CHARGING STATION FOR SUPPLYING ELECTRIC ENERGY TO A RECEIVER OF ELECTRICAL ENERGY
CORPS DE RACCORD ELECTRIQUE POUR UN CONNECTEUR DE CHARGE ET/OU UNE DOUILLE DE CHARGE, CONNECTEUR DE CHARGE ET STATION DE CHARGE DESTINE A DELIVRER DE L'ENERGIE ELECTRIQUE A UN RECEPTEUR D'ENERGIE ELECTRIQUE

(30) Priorität: 12.01.2015 DE 102015100347
(43) Veröffentlichungstag der Anmeldung: 13.07.2016
(73) Patentinhaber: Phoenix Contact e-Mobility GmbH, 32816 Schieder-Schwalenberg (DE)
(72) Erfinder: Führer, Thomas, 32825 Blomberg (DE)
(74) Vertreter: Janke, Christiane

(56) Entgegenhaltungen:
- WO-A1-2009/134379
- WO-A2-2012/051510
- DE-A1-102005 002 513
- DE-A1-102010 007 975
- DE-B3-102010 050 562
- DE-U1- 29 822 726
- US-A- 5 684 380
- US-A1- 2012 043 935

## Beschreibung

Die vorliegende Erfindung betrifft einen Elektroanschlusskörper für einen Ladestecker und/oder eine Ladebuchse. Ferner betrifft die vorliegende Erfindung einen Ladestecker zur Kopplung mit einer korrespondierenden Verbindungsvorrichtung und zur Übertragung elektrischer Energie. Weiterhin betrifft die vorliegende Erfindung eine Ladestation zur Abgabe elektrischer Energie an einen Empfänger elektrischer Energie.

Aus dem Stand der Technik sind Ladestecker für elektrisch antreibbare Fahrzeuge bekannt, die zur Verbindung mit einer korrespondierenden, als Buchse ausgebildeten, Verbindungsvorrichtung ausgebildet sind. Diesbezüglich wird auf den in der DE 10 2012 105 774 B3 offenbarten Ladestecker verwiesen. In dem Ladestecker sind Elektroanschlusskörper angeordnet, die jeweils einen ersten Anschlussbereich und einen zweiten Anschlussbereich aufweisen. Der erste Anschlussbereich ist als Kontaktbuchse ausgebildet und zur galvanischen Verbindung mit einem Kontaktstift geeignet, wobei der Kontaktstift mit einem elektrischen Energieempfänger, beispielsweise einem Akkumulator eines Fahrzeuges galvanisch verbundenen ist. Der zweite Anschlussbereich des Elektroanschlusskörpers ist zur galvanischen Verbindung mit einer elektrischen Energiequelle, beispielsweise eine Ladestation oder im Allgemeinen mit einem elektrischen Versorgungsnetz ausgebildet. Beispielsweise kann der zweite Anschlussbereich fest mit einem Ladekabel verbunden sein.

Die WO 2012/051510 A2 beschreibt eine aktiv gekühlte elektrische Verbindungsvorrichtung, die zwei miteinander zusammenwirkende Elektroanschlusskörper umfasst, die mit elektrischen Leitern elektrisch koppelbar sind, wobei in jedem der Elektroanschlusskörper ein Fluidkanal vorgesehen ist, durch den ein Kühlfluid, beispielsweise in Form von Druckluft, durchgeleitet werden kann. Zum Regulieren eines Druckes innerhalb der Kühlfluidleitung kann ein Regulationsventil vorgesehen sein.

Die WO 2009/134379 A1 beschreibt ein elektrisches Verbindungssystem für einen Ladestecker, wobei ein Elektroanschlusskörper einen ersten Anschlussbereich zur galvanischen Verbindung mit einem elektrischen Energieempfänger und einen zweiten Anschlussbereich zur galvanischen Verbindung mit einer elektrischen Energiequelle aufweist, wobei in dem Elektroanschlusskörper ein Kühlfluidkanal ausgebildet ist.

Aufgrund eines durch den Elektroanschlusskörper fließenden Ladestroms heizt sich der als Leistungssteckkontakt ausgebildete Elektroanschlusskörper unweigerlich aufgrund von ohmschen Stromwärmeverlusten auf. Das Aufheizen des Elektroanschlusskörpers ist jedoch auf eine Grenztemperaturerhöhung limitiert. So ist beispielsweise gemäß der Norm IEC 62196-3 die Grenztemperaturerhöhung auf 50K limitiert. Dies wiederum führt bei größtenteils genormten Steckverbindergeometrien zu einem maximalen Ladestrom von bis zu 200 A Dauerlast.

Bei einer intermittierenden Aufladung eines Akkumulators sind hingegen höhere Ladeströme über begrenzte Zeiträume notwendig, um den Akkumulator in einer gewünscht kurzen Zeit aufzuladen. Dies wiederum führt zu einer temporären Erhitzung der Elektroanschlusskörper, die über der Grenztemperaturerhöhung liegt. Der Leitungsquerschnitt der Elektroanschlusskörper lässt sich nicht beliebig vergrößern, da die Steckverbindergeometrien genormt sind und darüber hinaus für die Elektroanschlusskörper eine möglichst geringe Menge an leitfähigem Material, üblicherweise Kupfer, verwendet werden soll.

Der vorliegenden Erfindung liegt die Aufgabe zugrunde, einen Elektroanschlusskörper bereitzustellen, der erhöhte Ladeströme bei einer begrenzten Aufheizung ermöglicht, folglich also eine erhöhte Kurzzeitstromtragfähigkeit aufweist.

Diese Aufgabe wird durch einen Elektroanschlusskörper mit den Merkmalen des Anspruchs 1 gelöst. Vorteilhafte Ausführungsformen sind in den von Anspruch 1 abhängigen Ansprüchen beschrieben.

Ferner liegt der vorliegenden Erfindung die Aufgabe zugrunde, einen Ladestecker bereitzustellen, mittels dem erhöhte Ladeströme übertragbar sind, ohne dass sich der Ladestecker übermäßig erhitzt.

Diese Aufgabe wird durch einen Ladestecker mit den Merkmalen des Anspruchs 6 gelöst. Vorteilhafte Ausführungsformen sind in den von Anspruch 6 abhängigen Ansprüchen beschrieben.

Letztendlich liegt der vorliegenden Erfindung auch die Aufgabe zugrunde, eine Ladestation zur Abgabe elektrischer Energie an einen Empfänger elektrischer Energie bereitzustellen, mittels der erhöhte Spitzenladeströme übertragbar sind.

Diese Aufgabe wird durch eine Ladestation mit den Merkmalen des Anspruchs 9 gelöst. Vorteilhafte Ausführungsformen sind in den von Anspruch 9 abhängigen Ansprüchen beschrieben.

Im Genaueren wird die der vorliegenden Erfindung zugrunde liegende Aufgabe durch einen Elektroanschlusskörper für einen Ladestecker und/oder eine Ladebuchse gelöst, wobei der Elektroanschlusskörper einen ersten Anschlussbereich zur galvanischen Verbindung mit einem elektrischen Energieempfänger und einen zweiten Anschlussbereich zur galvanischen Verbindung mit einer elektrischen Energiequelle aufweist, und wobei der Elektroanschlusskörper dadurch gekennzeichnet ist, dass dieser einen im Elektroanschlusskörper ausgebildeten Kühlfluidkanal aufweist.

Der erfindungsgemäße Elektroanschlusskörper ermöglicht folglich eine Durchströmung mit einem Kühlfluid. Als Kühlfluid kann jegliches Kühlfluid, sowohl flüssig als auch gasförmig, verwendet werden. Beispielsweise kann als Kühlfluid Stickstoff verwendet werden. Besonders vorteilhaft ist es, wenn als Kühlfluid Druckluft verwendet wird, wobei unter Druckluft unter Druck gesetzte Atemluft zu verstehen ist. Das durch den Elektroanschlusskörper fließende Kühlfluid wird durch den Elektroanschlusskörper aufgeheizt und kühlt somit den Elektroanschlusskörper ab. Folglich können mittels des erfindungsgemäßen Elektroanschlusskörpers bei gleichbleibendem Leitungsquerschnitt des Elektroanschlusskörpers größere Ladeströme übertragen werden, ohne dass sich der Elektroanschlusskörper übermäßig erhitzt.

Der erste Anschlussbereich kann auch als frontseitiger Anschlussbereich bzw. frontseitiger Anschlussabschnitt oder auch als frontseitiger Funktionsbereich bezeichnet werden. Der zweite Anschlussbereich kann auch als rückseitiger Anschlussbereich bzw. als rückseitiger Anschlussabschnitt oder auch als rückseitiger Funktionsbereich bezeichnet werden. Der Empfänger elektrischer Energie kann beispielsweise ein Akkumulator sein. Insbesondere kann es sich bei dem Akkumulator um eine Fahrzeugbatterie eines elektrisch antreibbaren Fahrzeuges handeln. Wie bereits oben erwähnt, handelt es sich beim Kühlfluid üblicherweise um ein gasförmiges Kühlfluid, insbesondere um Druckluft. Gemäß der Erfindung weist der Elektroanschlusskörper einen mit dem Kühlfluidkanal fluidverbundenen Kühlfluidanschluss auf. Dies vereinfacht insbesondere die Verbindung des Kühlfluidkanals mit einer Kühlfluidleitung, die beispielsweise in einem Ladestecker vorgesehen sein kann. Durch Bereitstellung einer Kühlfluidleitung in einem Ladestecker wird der zum Kühlen des Elektroanschlusskörpers notwendige Kühlfluidverbrauch reduziert. Gemäß der Erfindung ist der erste Anschlussbereich als Kontaktbuchse mit einem Aufnahmeraum ausgebildet. Die Kontaktbuchse kann auch als Anschlussbuchse bezeichnet werden. In den Aufnahmeraum der Kontaktbuchse kann ein Kontaktstift positioniert bzw. eingeführt werden, sodass eine elektrische / galvanische Verbindung realisierbar ist. Weiter vorzugsweise ist der Aufnahmeraum der Kontaktbuchse mit dem Kühlfluidkanal fluidverbunden. Dadurch ist es ermöglicht, dass nicht lediglich nur die Kontaktbuchse sondern auch ein in die Kontaktbuchse eingeführter Kontaktstift mittels des Kühlfluids kühlbar ist.

Weiter vorzugsweise weist die Kontaktbuchse zumindest eine sich entlang einer Längsachse der Kontaktbuchse und bis zu einer Stirnseite der Kontaktbuchse erstreckende Längsausnehmung auf, sodass die Kontaktbuchse zumindest zwei den Aufnahmeraum der Kontaktbuchse umschließende Mantelsegmente aufweist. Nach Durchströmen der Längsausnehmungen und/oder des Kontaktbereiches der Mantelsegmente und eines in den Aufnahmeraum eingeführten Kontaktstiftes entweicht das Kühlfluid an der Stirnseite der Kontaktbuchse.

Durch eine entsprechende Ausbildung des Elektroanschlusskörpers ist eine nochmals verbesserte Kühlung der Kontaktbuchse als auch eines in den Aufnahmeraum der Kontaktbuchse eingeführten Kontaktstiftes der fahrzeugseitigen Ladebuchse durch Umströmen der Mantelsegmente und des an diesen anliegenden Kontaktstiftes über die Längsausnehmungen ermöglicht.

Die radialen Abstände der Mantelsegmente zueinander sind vorzugsweise variabel, das heißt die Mantelsegmente können auseinandergedrückt werden, wenn beispielsweise ein Kontaktstift in die Kontaktbuchse geschoben wird bzw. die Kontaktbuchse auf einen Kontaktstift aufgeschoben wird. Ferner wird durch eine entsprechend elastische Ausbildung der Kontaktbuchse ein elektrischer / galvanischer Kontakt zwischen der Kontaktbuchse und einem Kontaktstift stets gleichbleibende und reproduzierbare Eigenschaften aufweisen.

Vorzugsweise weist die Kontaktbuchse mehr als eine Längsausnehmung und folglich auch mehr als zwei Mantelsegmente auf. Vorzugsweise weist die Kontaktbuchse vier Längsausnehmungen und entsprechend vier Mantelsegmente auf.

Weiter vorzugsweise erstreckt sich die Längsausnehmung bzw. erstrecken sich die Längsausnehmungen im Wesentlichen über die gesamte Längserstreckung der Kontaktbuchse, wodurch die Kontaktbuchse besonders elastisch ausgebildet ist und sich unterschiedlichen Durchmessern von Kontaktstiften verbessert anpassen kann, wodurch wiederum ein Stromübergang von der Kontaktbuchse auf den Kontaktstift verbessert ist. Vorzugsweise ist die Kontaktbuchse zylinderförmig ausgestaltet, sodass es sich bei den Mantelsegmenten vorzugsweise um Zylindermantelsegmente handelt. Vorzugsweise weist der Kühlfluidkanal eine sich quer zu einer Längsachse des Elektroanschlusskörpers bzw. des ersten Anschlussbereichs erstreckende Radialbohrung auf. Eine entsprechende Ausbildung des Elektroanschlusskörpers ist besonders einfach und daher kostengünstig möglich.

Weiter vorzugsweise weist der Kühlfluidkanal ferner eine sich entlang der Längsachse des Elektroanschlusskörpers bzw. des ersten Anschlussbereichs erstreckende und in die Radialbohrung mündende Axialbohrung auf. Auch eine entsprechende Ausbildung des Elektroanschlusskörpers ist besonders einfach und daher kostengünstig möglich. Gemäß der Erfindung weist der Elektroanschlusskörper ein im Kühlfluidkanal angeordnetes Einwegventil auf, das einen Fluidfluss vom Kühlfluidanschluss bzw. von einer Kühlfluideinlassöffnung in den Kühlfluidkanal zulässt jedoch einem Fluidfluss aus dem Kühlfluidkanal durch den Kühlfluidanschluss entgegenwirkt.

Durch eine entsprechende Ausbildung des Elektroanschlusskörpers ist ein Eindringen von Feuchtigkeit in den Kühlfluidkanal unterbunden, sodass ein erhöhter Korrosionsschutz sowohl des Elektroanschlusskörpers als auch mit dem Elektroanschlusskörper weiter verbundenen Einrichtungen gewährleistet ist. Das Einwegventil, das auch als Rückschlagventil bezeichnet werden kann, ist vorzugsweise am Ende des Kühlfluidkanals zwischen dem Kühlfluidkanal und dem Anschlussraum der Kontaktbuchse angeordnet. Eine besonders kostengünstige Variante des Einwegventils ist als Silikoneinwegventil ausgebildet.

Die der vorliegenden Erfindung zugrundeliegende Aufgabe wird auch durch einen Ladestecker zur Kopplung mit einer korrespondierenden Verbindungsvorrichtung und zur Übertragung elektrischer Energie gelöst, wobei der Ladestecker dadurch gekennzeichnet ist, dass dieser zumindest einen in einem Ladesteckergehäuse angeordneten erfindungsgemäßen Elektroanschlusskörper aufweist, wobei der zweite Anschlussbereich des Elektroanschlusskörpers mit einem Ladekabel galvanisch verbunden ist, und wobei der erste Anschlussbereich des Elektroanschlusskörpers über eine Kontaktseite des Ladesteckergehäuses zugänglich ist. Ferner ist der Kühlfluidkanal des Elektroanschlusskörpers mit einer Kühlfluidquelle fluidverbunden.

Ein entsprechend ausgebildete Ladestecker ermöglicht erhöhte Ladeströme bei Beibehaltung vorgegebener Leitungsquerschnitte, ohne dass sich der Ladestecker und Komponenten innerhalb des Ladesteckers, insbesondere der Elektroanschlusskörper, während einer Stromübertragung übermäßig erhitzen.

Vorzugsweise ist der Laderstecker derart ausgebildet, dass das Ladesteckergehäuse im Wesentlichen fluiddicht und somit druckbeaufschlagbar ist. Dabei ist der Ladesteckergehäuseinnenraum mit einer Kühlfluidquelle fluidverbindbar. Der Kühlfluidkanal des Elektroanschlusskörpers steht dabei mit dem Ladesteckergehäuseinnenraum in Fluidverbindung.

Ein entsprechend ausgebildeter Ladestecker ist konstruktiv besonders einfach und es ist keine gesonderte Kühlfluidleitung innerhalb des Ladesteckers notwendig.

Im Ladesteckergehäuseinnenraum druckbeaufschlagtes Kühlfluid, insbesondere Druckluft, wird folglich über den Kühlfluidkanal sowohl den Elektroanschlusskörper als auch beispielsweise einen weiteren, mit dem Elektroanschlusskörper verbundenen (fahrzeugseitigen), Elektroanschlusskörper, beispielsweise ein Kontaktstift, kühlen. Der Ladestecker ist insbesondere als Ladestecker für elektrisch antreibbare Fahrzeuge ausgebildet. Die korrespondierende Verbindungseinrichtung kann beispielsweise eine fahrzeugseitige Ladebuchse sein. Als Kühlfluidquelle kann insbesondere ein Druckluftkompressor verwendet werden.

Vorzugsweise weist der Ladestecker einen Elektroanschlusskörper auf, der einen mit dem Kühlfluidkanal fluidverbundenen Kühlfluidanschluss und eine mit dem Kühlfluidanschluss fluidverbundene Kühlfluidleitung, die mit einer Kühlfluidquelle fluidverbindbar ist, aufweist.

Bei einer entsprechenden Ausbildung des Ladesteckers muss zur Kühlung des Elektroanschlusskörpers nicht der gesamte Ladesteckergehäuseinnenraum druckbeaufschlagt werden. Vielmehr muss lediglich die Kühlfluidleitung druckbeaufschlagt werden, sodass zur Kühlung des Elektroanschlusskörpers ein verminderter Kühlfluidverbrauch notwendig ist. Als Kühlfluidquelle kann insbesondere ein Druckluftkompressor verwendet werden.

Die der vorliegenden Erfindung zugrunde liegende Aufgabe wird ferner durch eine Ladestation zur Abgabe elektrischer Energie an einen Empfänger elektrischer Energie gelöst, wobei die Ladestation dadurch gekennzeichnet ist, dass diese einen erfindungsgemäßen Ladestecker und eine Kühlfluidquelle aufweist, die mit dem Kühlfluidkanal des Elektroanschlusskörpers fluidverbindbar ist.

Insbesondere handelt es sich bei der Ladestation um eine Ladestation zum Aufladen eines Akkumulators, insbesondere einer Batterie eines elektrobetriebenen Kraftfahrzeugs. Die Kühlfluidquelle kann insbesondere als Druckluftkompressor ausgebildet sein, sodass als Kühlfluid Druckluft verwendet wird.

Vorzugsweise weist die Ladestation einen Ladestecker auf, der wiederum einen Elektroanschlusskörper aufweist, der einen mit dem Kühlfluidkanal fluidverbundenen Kühlfluidanschluss aufweist, wobei der Kühlfluidanschluss mit der Kühlfluidleitung fluidverbunden ist, und wobei die Kühlfluidquelle mit der Kühlfluidleitung fluidverbunden ist.

Weitere Vorteile, Einzelheiten und Merkmale der Erfindung ergeben sich nachfolgend aus dem erläuterten Ausführungsbeispiel. Dabei zeigen im Einzelnen:
- Figur 1:: eine perspektivische Darstellung zweier erfindungsgemäßer Elektroanschlusskörper gemäß einer ersten Ausführungsform der vorliegenden Erfindung, die jeweils mit einer Kühlfluidleitung fluidverbunden sind;
- Figur 2:: eine Draufsicht auf die in Figur 1 dargestellten Elektroanschlusskörper;
- Figur 3:: eine Frontalansicht der in den Figuren 1 und 2 dargestellten Elektroanschlusskörper;
- Figur 4:: eine Querschnittsdarstellung des in den Figuren 1 bis 3 dargestellten Elektroanschlusskörpers samt einer mit diesem fluidverbundenen Kühlfluidleitung;
- Figur 5:: eine perspektivische Darstellung eines erfindungsgemäßen Ladesteckers gemäß der ersten Ausführungsform der vorliegenden Erfindung mit einer aufgebrochenen Gehäusewand, sodass ein Ladesteckergehäuseinnenraum einsehbar ist;
- Figur 6:: eine Querschnittsdarstellung des in Figur 5 dargestellten Ladesteckers;
- Figur 7:: eine Draufsicht auf einen Elektroanschlusskörper gemäß einer zweiten Ausführungsform der vorliegenden Erfindung;
- Figur 8:: eine Querschnittsdarstellung des in Figur 7 dargestellten Elektroanschlusskörpers;
- Figur 9a:: eine Draufsicht auf die Stirnseite des in Figur 7 dargestellten Elektroanschlusskörpers;
- Figur 9B:: eine Querschnittsdarstellung des in Figur 8 dargestellten Elektroanschlusskörpers entlang der Linie A-A;
- Figur 10:: eine perspektivische Darstellung von zwei in den Figuren 7 bis 9 dargestellten Elektroanschlusskörper;
- Figur 11:: eine perspektivische Darstellung eines erfindungsgemäßen Ladesteckers gemäß der zweiten Ausführungsform der vorliegenden Erfindung mit einer aufgebrochenen Gehäusewand, sodass ein Ladesteckergehäuseinnenraum ersichtlich ist; und
- Figur 12:: eine perspektivische Darstellung des Frontbereichs der in den Figuren 5 und 11 dargestellten Ladestecker.

In der nun folgenden Beschreibung bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, so dass eine wiederholende Beschreibung vermieden wird. Ferner sind einzelne Merkmale, die in Zusammenhang mit einer Ausführungsform beschrieben wurden, auch separat in andere Ausführungsformen verwendbar.

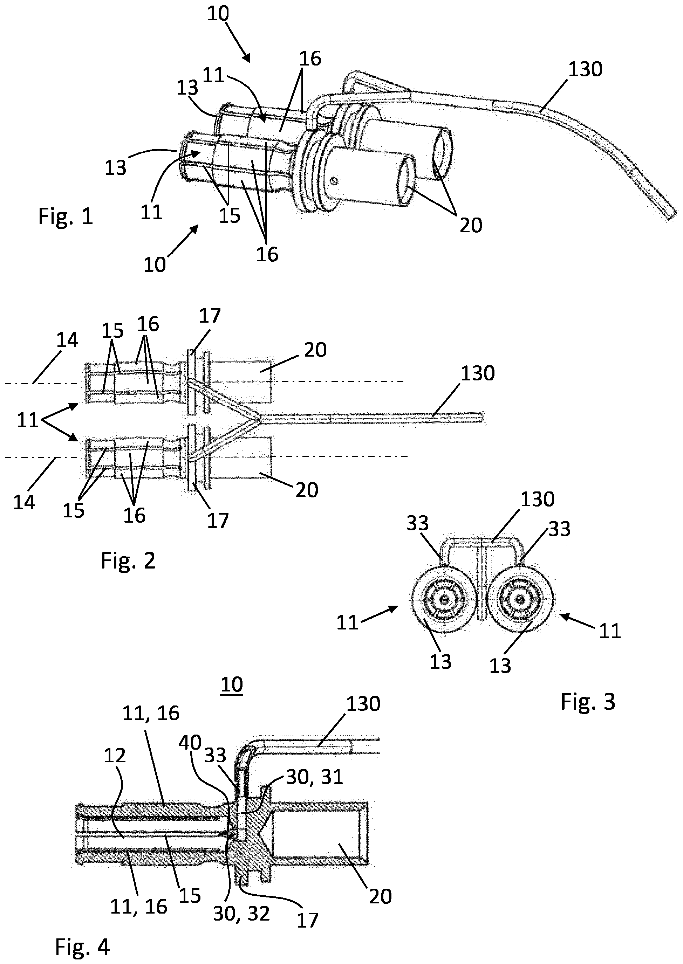

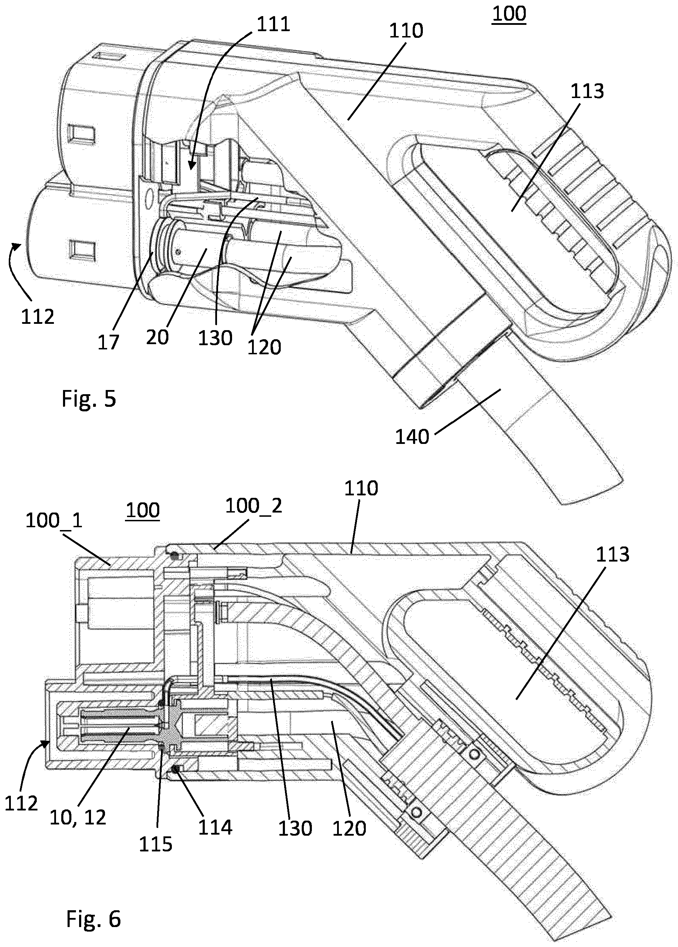

In den Figuren 1 bis 4 ist ein Elektroanschlusskörper 10 dargestellt, der Verwendung in einem in den Figuren 5, 6 und 12 dargestellten Ladestecker 100 finden. Im genaueren ist in den Figuren 1 bis 3 ein Paar von Elektroanschlusskörpern 10 dargestellt. Jedoch ist die vorliegende Erfindung nicht darauf beschränkt, dass die Elektroanschlusskörper 10 in einen Ladestecker 100 für Elektrofahrzeuge verwendet werden, denn die erfindungsgemäßen Elektroanschlusskörper 10 können in jeglichem Ladestecker Verwendung finden.

Wie aus den Figuren 1 bis 4 ersichtlich ist, umfasst der Elektroanschlusskörper 10 einen ersten als Kontaktbuchse 11 ausgebildeten Anschlussbereich 11, der zur galvanischen Verbindung mit einem elektrischen Energieempfänger, der im vorliegenden Ausführungsbeispiel eine Batterie eines elektrobetriebenen Fahrzeuges sein kann, ausgebildet ist. Im Genaueren ist die Kontaktbuchse 11 zur Aufnahme eines in den Figuren nicht dargestellten Kontaktstiftes ausgebildet. Der erfindungsgemäße Elektroanschlusskörper 10 umfasst ferner einen zweiten Anschlussbereich 20, der zur galvanischen Verbindung mit einer elektrischen Energiequelle ausgebildet ist. Bei dieser elektrischen Energiequelle kann es sich beispielsweise um eine Ladestation für ein elektroangetriebenes Kraftfahrzeug handeln.

Insbesondere aus Figur 4 ist ersichtlich, dass der Elektroanschlusskörper 10 einen im Elektroanschlusskörper 10 ausgebildeten Kühlfluidkanal 30 aufweist. Der Kühlfluidkanal 30, der auch als Druckluftkanal 30 bezeichnet werden kann, umfasst dabei eine sich quer (senkrecht) zu einer Längsachse 14 des Elektroanschlusskörpers 10 erstreckende Radialbohrung 31 und umfasst ferner eine sich entlang der Längsachse 14 erstreckende und in die Radialbohrung 31 mündende Axialbohrung 32, wobei die Axialbohrung 32 auch als Blindbohrung 32 bezeichnet werden kann. Der so gebildete Kühlfluidkanal 30 steht mit einem Aufnahmeraum 12 der Kontaktbuchse 11 in Fluidverbindung, wobei zwischen dem Aufnahmeraum 12 und dem Kühlfluidkanal 30 ein Einwegventil 40 angeordnet ist, das einen Kühlfluidfluss lediglich in Richtung des Aufnahmeraumes 12 nicht jedoch in Richtung vom Aufnahmeraum 12 in den Kühlfluidkanal 30 ermöglicht. Dadurch wird ein Eindringen von Feuchtigkeit in den Kühlfluidkanal 30 und in eine mit diesem fluidverbundene Kühlfluidleitung 130 unterbunden.

Im Folgenden wird als Kühlfluid unter Druck gesetzte Kühlluft, d.h. Druckluft verwendet. Jedoch ist die vorliegende Erfindung nicht hierauf beschränkt, vielmehr können als Kühlfluid sämtliche gasförmige Kühlfluide verwendet werden.

Insbesondere aus Figur 4 ist ersichtlich, dass der Kühlfluidkanal 30 mittels eines mit diesem fluidverbundenen Kühlfluidanschluss 33 mit der Kühlfluidleitung 130 fluidverbunden ist. Folglich kann der Kühlfluidkanal 30 und der Aufnahmeraum 12 mittels der Druckluftleitung 130 mit Druckluft versorgt werden.

Insbesondere aus den Figuren 1, 2 und 4 ist ersichtlich, dass die Kontaktbuchse 11 segmentiert aufgebaut ist. Dazu weist die Kontaktbuchse 11 eine Vielzahl von Längsausnehmungen 15 auf, sodass die Kontaktbuchse 11 eine der Anzahl der Längsausnehmungen 15 entsprechende Anzahl von Mantelsegmenten 16 aufweist. In dem dargestellten Ausführungsbeispiel sind die Mantelsegmente 16 als Zylindermantelsegmente 16 ausgebildet, wobei die Kontaktbuchse 11 vier Längsausnehmungen 15, die sich entlang einer Längsachse 14 der Kontaktbuchse 11 erstrecken, und folglich auch vier Zylindermantelsegmente 16 aufweist.

Die radialen Abstände der Zylindermantelsegmente 16 sind zueinander variabel, d.h. die einzelnen Zylindermantelsegmente 16 können unter Vergrößerung der Längsausnehmungen auseinandergedrückt werden, wenn beispielsweise die Kontaktbuchse 11 auf einen in den Figuren nicht dargestellten und beispielsweise fahrzeugseitig bereitgestellten Kontaktstift aufgeschoben wird. Dadurch wird eine zuverlässige elektrische/galvanische Verbindung zwischen der Kontaktbuchse 11 und dem Kontaktstift erreicht.

Wenn die Kontaktbuchse 11 auf einen Kontaktstift aufgeschoben wird, sodass der Kontaktstift in dem Aufnahmeraum 12 der Kontaktbuchse 11 aufgenommen ist, und wenn anschließend der Druckluftkanal 30 mit Druckluft versorgt wird, dann fließt die Druckluft entlang der Längsausnehmungen 15 und tritt an der Stirnseite 13 der Kontaktbuchse 11 aus. Folglich wird eine Kühlung sowohl der Kontaktbuchse 11 als auch eines im Aufnahmeraum 12 befindlichen Kontaktstiftes erreicht. Folglich können höhere Ladeströme realisiert werden, ohne dass sich der Elektroanschlusskörper 10 übermäßig erhitzt.

In Figur 5 ist ein erfindungsgemäßer Ladestecker 100 zur Kopplung mit einer korrespondierenden und in den Figuren nicht dargestellten Verbindungsvorrichtung und zur Übertragung elektrischer Energie dargestellt. Bei dem dargestellten Ladestecker 100 handelt es sich um einen Ladestecker 100 für das sogenannte Combined AC/DC-Charging System, dass ein Ladesteckersystem für Elektrofahrzeuge nach IEC 62196 ist, und ein AC-Laden (Wechselstrom) und ein DC-Laden (Gleichstrom) unterstützt. Das Combined AC/DC-Charging System besteht im Wesentlichen aus einer fahrzeugseitigen Buchse, dem sogenannten Inlet, und dem Ladestecker 100.

Wie aus Figur 5 ersichtlich ist, weist der Ladestecker 100 einen Ladesteckergehäuse 110 auf, in dem wiederum ein Haltegriff 113 zur Handhabe des Ladesteckers 100 ausgebildet ist. Endseitig ist der Ladestecker 100 mit einem Versorgungskabel 140 verbunden, mittels dem der Ladestecker 100 mit einer nicht dargestellten Ladestation verbunden bzw. verbindbar ist. Eine frontseitige Kontaktseite 112 des Ladesteckers 100 ist in eine nicht dargestellte Ladebuchse, beispielsweise eines elektrobetriebenen Kraftfahrzeugs einführbar.

Bei dem in Figur 5 dargestellten Ladestecker 100 ist eine Gehäusewand aufgebrochen dargestellt, sodass ein Ladesteckergehäuseinnenraum 111 erkennbar ist. Der dargestellte Ladestecker 100 weist zwei im Ladesteckergehäuse 110 angeordnete Elektroanschlusskörper 10 auf, die mit Bezug auf die Figuren 1 bis 4 oben beschrieben sind. Die Elektroanschlusskörper 10 sind mittels einer Befestigungseinrichtung 17, die als Befestigungsflansch 17 oder als Dichtflansch 17 bezeichnet werden kann, mit dem Ladesteckergehäuse 110 verbunden. Insbesondere aus Figur 6 ist ersichtlich, dass zwischen dem Ladesteckergehäuse 110 und dem Befestigungsflansch 17 eine zweite Dichtung 115 angeordnet ist, so dass durch eine Öffnung des Ladesteckergehäuses 110, durch die die Kontaktbuchse 11 des Elektroanschlusskörpers 10 hindurchgeschoben ist, keine Feuchtigkeit in den Ladesteckergehäuseinnenraum 111 eindringen kann.

Der zweite Anschlussbereich 20 des Elektroanschlusskörpers 10 ist mit einem Ladekabel 120 galvanisch verbunden, sodass durch Einführen eines in den Figuren nicht dargestellten Kontaktstiftes in den Aufnahmeraum 12 der Kontaktbuchse 11 über den Elektroanschlusskörper 10 ein Ladestrom übertragbar ist. Ferner ist aus den Figuren 5 und 6 ersichtlich, dass der Kühlfluidanschluss 33 des Elektroanschlusskörpers 10 mit der Kühlfluidleitung 130 fluidverbunden ist. Sowohl die Ladekabel 120 als auch die Kühlfluidleitung 130 sind im Versorgungskabel 140 integriert.

Insbesondere aus Figur 6 ist ersichtlich, dass der frontseitige Bereich 100_1 des Ladesteckers 100 mit einem rückseitigen Bereich 100_2 des Ladesteckers 100 verbunden ist, wobei zwischen dem frontseitigen Bereich und dem rückseitigen Bereich eine erste Dichtung 114 des Ladesteckergehäuses 110 angeordnet ist, sodass der Ladesteckergehäuseinnenraum 111 zuverlässig vor Feuchtigkeitseintritt geschützt ist.

Eine galvanische Kontaktierung des Elektroanschlusskörpers 10 mit einem Kontaktstift kann detektiert werden, sodass erst bei einer entsprechenden galvanischen Kontaktierung die Druckluftleitung 130 mit Druckluft versorgt wird.

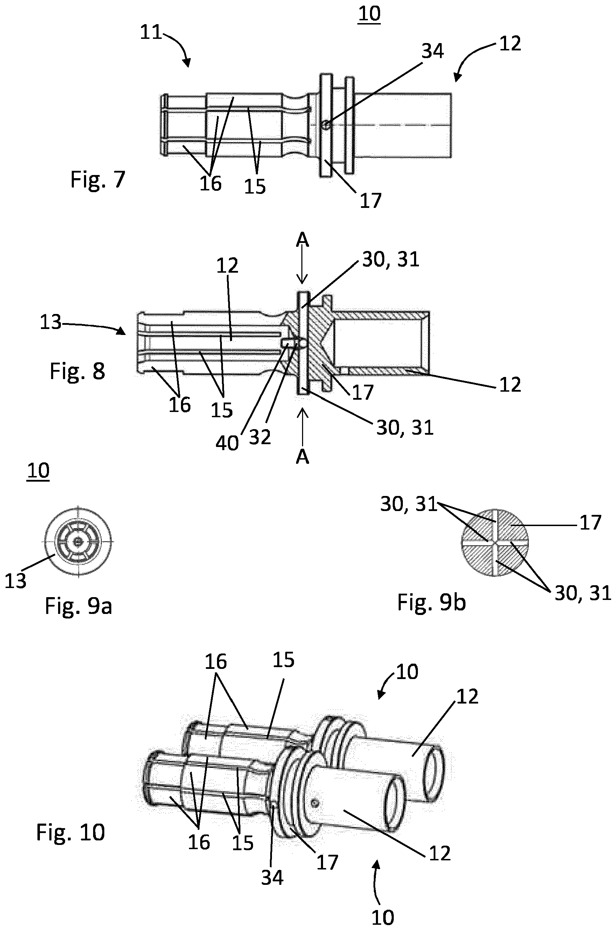

In den Figuren 7 bis 10 ist ein Elektroanschlusskörper 10 gemäß einer zweiten Ausführungsform der vorliegenden Erfindung dargestellt. Der Elektroanschlusskörper 10 unterscheidet sich von dem Elektroanschlusskörper 10 gemäß der ersten Ausführungsform dadurch, dass dieser keinen separaten Kühlfluidanschluss 33 aufweist. Weiterhin ist bei dem in den Figuren 7 bis 10 dargestellten Elektroanschlusskörper 10 der Kühlfluidkanal 30 durch vier Radialbohrungen 31 und einer in den Schnittbereich der vier Radialbohrungen 31 mündenden Axialbohrung 32 gebildet. Die Radialbohrungen 31 münden ferner jeweils in Kühlfluideinlassöffnungen 34, die am Außenumfang des Befestigungsflanschs 17 ausgebildet sind.

Die übrige Funktionalität und der übrige Aufbau des Elektroanschlusskörpers 10 gemäß der zweiten Ausführungsform ist identisch mit der Funktionalität und dem Aufbau des Elektroanschlusskörpers 10 gemäß der ersten Ausführungsform, sodass auf die entsprechende Beschreibung verwiesen wird.

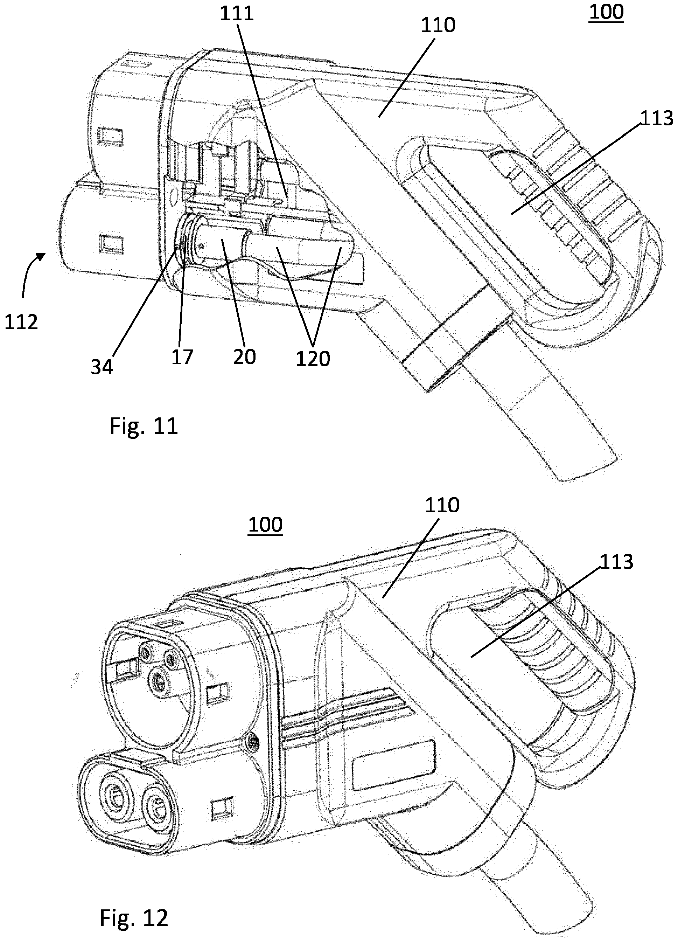

In Figur 11 ist ein Ladestecker 100 gemäß einer zweiten Ausführungsform der vorliegenden Erfindung dargestellt, in dem der Elektroanschlusskörper 10 gemäß der zweiten Ausführungsform eingebaut ist. Damit der Kühlfluidkanal 30 mit Druckluft versorgt wird, muss der gesamte Ladesteckergehäuseinnenraum 111 mit Druckluft beaufschlagt werden. Die Druckluft fließt anschließend über die Kühlfluideinlässe 34 in den Kühlfluidkanal 30 und somit zwischen den Zylindermantelsegmenten 16 der Kontaktbuchse 11, also in den Längsausnehmungen 15 der Kontaktbuchse 11. Die Druckluft entweicht dem System an den Stirnseiten 13 der Elektroanschlusskörper 10.

Die übrige Funktionalität und der übrige Aufbau des in Figur 11 dargestellten Ladesteckers 100 ist identisch mit der Funktionalität und dem Aufbau des in Figur 5 dargestellten Ladesteckers 100, sodass auf die Beschreibung in Bezug auf die Figuren 5 und 6 verwiesen wird.

### Bezugszeichenliste:

- 10: Elektroanschlusskörper / Leistungskontakt
- 11: erster Anschlussbereich / Kontaktbuchse (des Elektroanschlusskörpers)
- 12: Aufnahmeraum (der Kontaktbuchse)
- 13: Stirnseite (der Kontaktbuchse)
- 14: Längsachse (der Kontaktbuchse)
- 15: Längsausnehmung (der Kontaktbuchse)
- 16: Mantelsegment / Zylindermantelsegment (der Kontaktbuchse)
- 17: Befestigungseinrichtung / Befestigungsflansch (des Elektroanschlusskörpers)
- 20: zweiter Anschlussbereich (des Elektroanschlusskörpers)
- 30: Kühlfluidkanal / Druckluftkanal
- 31: Radialbohrung (des Kühlfluidkanals)
- 32: Axialbohrung / Blindbohrung (des Kühlfluidkanals)
- 33: Kühlfluidanschluss / Druckluftanschluss
- 34: Kühlfluideinlassöffnung
- 40: Einwegventil / Rückschlagventil
- 100: Ladestecker / Steckverbinder
- 110: Ladesteckergehäuse
- 100_1: frontseitiger Bereich (des Ladesteckers)
- 100_2: rückseitiger Bereich (des Ladesteckers)
- 111: Ladesteckergehäuseinnenraum
- 112: Kontaktseite (des Ladesteckergehäuses)
- 113: Haltegriff (des Ladesteckergehäuses)
- 114: erste Dichtung (des Ladesteckergehäuses)
- 115: zweite Dichtung
- 120: Ladekabel (des Ladesteckers)
- 130: Kühlfluidleitung / Druckluftleitung (des Ladesteckers)
- 140: Versorgungskabel

## Patentansprüche

1. Elektroanschlusskörper (10) für einen Ladestecker (100) und/oder eine Ladebuchse, wobei der Elektroanschlusskörper (10) einen ersten Anschlussbereich (11) zur galvanischen Verbindung mit einem elektrischen Energieempfänger und einen zweiten Anschlussbereich (20) zur galvanischen Verbindung mit einer elektrischen Energiequelle aufweist, wobei der Elektroanschlusskörper (10) einen im Elektroanschlusskörper (10) ausgebildeten Kühlfluidkanal (30) und einen mit dem Kühlfluidkanal (30) fluidverbundenen Kühlfluidanschluss (33) aufweist, wobei der erste Anschlussbereich (11) als Kontaktbuchse (11) mit einen Aufnahmeraum (12) ausgebildet ist, **dadurch gekennzeichnet, dass** der Elektroanschlusskörper (10) ein im Kühlfluidkanal (30) angeordnetes Einwegventil (40) aufweist, das einen Fluidfluss vom Kühlfluidanschluss (33) in den Kühlfluidkanal (30) zulässt jedoch einem Fluidfluss aus dem Kühlfluidkanal (30) durch den Kühlfluidanschluss (33) entgegenwirkt, wobei das Einwegventil (40) am Ende des Kühlfluidkanals (30) zwischen dem Kühlfluidkanal (30) und dem Aufnahmeraum (12) der Kontaktbuchse (11) angeordnet ist.

2. Elektroanschlusskörper (10) nach Anspruch 1, **dadurch gekennzeichnet, dass** ein Aufnahmeraum (12) der Kontaktbuchse (11) mit dem Kühlfluidkanal (30) fluidverbunden ist.

3. Elektroanschlusskörper (10) nach einem der Ansprüche 1 oder 2, **dadurch gekennzeichnet, dass** die Kontaktbuchse (11) zumindest eine sich entlang einer Längsachse (14) der Kontaktbuchse (11) und bis zu einer Stirnseite (13) der Kontaktbuchse (11) erstreckende Längsausnehmung (15) aufweist, so dass die Kontaktbuchse (11) zumindest zwei den Aufnahmeraum (12) der Kontaktbuchse (11) umschließende Mantelsegmente (16) aufweist.

4. Elektroanschlusskörper (10) nach einem der vorhergehenden Ansprüche, **dadurch gekennzeichnet, dass** der Kühlfluidkanal (30) eine sich quer zu einer Längsachse (14) des Elektroanschlusskörpers (10) erstreckende Radialbohrung (31) aufweist.

5. Elektroanschlusskörper (10) nach Anspruch 4, **dadurch gekennzeichnet, dass** der Kühlfluidkanal (30) ferner ein sich entlang der Längsachse (14) des Elektroanschlusskörpers (10) erstreckende und in die Radialbohrung (31) mündende Axialbohrung (32) aufweist.

6. Ladestecker (100) zur Kopplung mit einer korrespondierenden Verbindungsvorrichtung und zur Übertragung elektrischer Energie, **gekennzeichnet durch** die folgenden Merkmale:
- der Ladestecker (100) weist zumindest einen in einem Ladesteckergehäuse (110) angeordneten Elektroanschlusskörper (10) nach einem der vorhergehenden Ansprüche auf, wobei der zweite Anschlussbereich (20) des Elektroanschlusskörpers (10) mit einem Ladekabel (120) galvanisch verbunden ist, und wobei der erste Anschlussbereich (11) des Elektroanschlusskörpers (10) über eine Kontaktseite (112) des Ladesteckergehäuses (110) zugänglich ist; und
- der Kühlfluidkanal (30) des Elektroanschlusskörpers (10) ist mit einer Kühlfluidquelle fluidverbunden ist.

7. Ladestecker (100) nach Anspruch 6, **gekennzeichnet durch** die folgenden Merkmale:
- das Ladesteckergehäuse (110) ist im Wesentlichen fluiddicht und somit druckbeaufschlagbar ausgebildet;
- ein Ladesteckergehäuseinnenraum (111) ist mit einer Kühlfluidquelle fluidverbindbar; und
- der Kühlfluidkanal (30) des Elektroanschlusskörpers (10) steht mit dem Ladesteckergehäuseinnenraum (111) in Fluidverbindung.

8. Ladestecker (100) nach Anspruch 6, **dadurch gekennzeichnet, dass** der Laderstecker (100) eine mit dem Kühlfluidanschluss (33) fluidverbundene Kühlfluidleitung (130), die mit einer Kühlfluidquelle fluidverbindbar ist, aufweist.

9. Ladestation zur Abgabe elektrischer Energie an einen Empfänger elektrischer Energie, **dadurch gekennzeichnet, dass** die Ladestation einen Ladestecker (100) nach einem der Ansprüche 6 bis 8 und eine Kühlfluidquelle aufweist, die mit dem Kühlfluidkanal (30) des Elektroanschlusskörpers (10) fluidverbindbar ist.

10. Ladestation nach Anspruch 9, **dadurch gekennzeichnet, dass** die Ladestation einen Ladestecker (100) mit den Merkmalen des Anspruchs 8 aufweist, wobei die Kühlfluidquelle mit der Kühlfluidleitung (130) fluidverbunden ist.

## Claims

1. Electrical connection body (10) for a charging plug (100) and/or a charging socket, wherein the electrical connection body (10) has a first connection region (11) for electrically conductive connection to an electrical energy receiver and has a second connection region (20) for electrically conductive connection to an electrical energy source, wherein the electrical connection body (10) has a cooling fluid channel (30), which is formed in the electrical connection body (10), and a cooling fluid connection (33) which is fluidically connected to the cooling fluid channel (30), wherein the first connection region (11) is in the form of a contact socket (11) with a receiving space (12), **characterized in that** the electrical connection body (10) has a one-way valve (40) which is arranged in the cooling fluid channel (30) and permits fluid to flow from the cooling fluid connection (33) into the cooling fluid channel (30) but prevents fluid from flowing from the cooling fluid channel (30) through the cooling fluid connection (33), wherein the one-way valve (40) is arranged at the end of the cooling fluid channel (30) between the cooling fluid channel (30) and the receiving space (12) in the contact socket (11).

2. Electrical connection body (10) according to Claim 1, **characterized in that** a receiving space (12) in the contact socket (11) is fluidically connected to the cooling fluid channel (30).

3. Electrical connection body (10) according to either of Claims 1 and 2, **characterized in that** the contact socket (11) has at least one longitudinal recess (15) which extends along a longitudinal axis (14) of the contact socket (11) and as far as an end side (13) of the contact socket (11), so that the contact socket (11) has at least two casing segments (16) which surround the receiving space (12) in the contact socket (11).

4. Electrical connection body (10) according to one of the preceding claims, **characterized in that** the cooling fluid channel (30) has a radial bore (31) which extends transverse to a longitudinal axis (14) of the electrical connection body (10).

5. Electrical connection body (10) according to Claim 4, **characterized in that** the cooling fluid channel (30) further has an axial bore (32) which extends along the longitudinal axis (14) of the electrical connection body (10) and issues into the radial bore (31).

6. Charging plug (100) for coupling to a corresponding connecting apparatus and for transmitting electrical energy, **characterized by** the following features:
- the charging plug (100) has at least one electrical connection body (10) according to one of the preceding claims which is arranged in a charging plug housing (110), wherein the second connection region (20) of the electrical connection body (10) is electrically conductively connected to a charging cable (120), and wherein the first connection region (11) of the electrical connection body (10) is accessible via a contact side (112) of the charging plug housing (110); and
- the cooling fluid channel (30) of the electrical connection body (10) is fluidically connected to a cooling fluid source.

7. Charging plug (100) according to Claim 6, **characterized by** the following features:
- the charging plug housing (110) is substantially fluid-tight and therefore is designed such that pressure can be applied to it;
- a charging plug housing interior space (111) can be fluidically connected to a cooling fluid source; and
- the cooling fluid channel (30) of the electrical connection body (10) is fluidically connected to the charging plug housing interior space (111).

8. Charging plug (100) according to Claim 6, **characterized in that** the charging plug (100) has a cooling fluid line (130) which is fluidically connected to the cooling fluid connection (33) and can be fluidically connected to a cooling fluid source.

9. Charging station for dispensing electrical energy to a receiver of electrical energy, **characterized in that** the charging station has a charging plug (100) according to one of Claims 6 to 8 and a cooling fluid source which can be fluidically connected to the cooling fluid channel (30) of the electrical connection body (10).

10. Charging station according to Claim 9, **characterized in that** the charging station has a charging plug (100) having the features of Claim 8, wherein the cooling fluid source is fluidically connected to the cooling fluid line (130).

## Revendications

1. Corps de raccord électrique (10) pour un connecteur de charge (100) et/ou une douille de charge, le corps de raccord électrique (10) comportant une première zone de raccord (11) pour liaison galvanique avec un récepteur d'énergie électrique et une deuxième zone de raccord (20) pour liaison galvanique avec une source d'énergie électrique, le corps de raccord électrique (10) comportant un conduit de fluide de refroidissement (30) constitué dans le corps de raccord électrique (10) et un raccord de fluide de refroidissement (33) en liaison de fluide avec le conduit de fluide de refroidissement (30), la première zone de raccord (11) étant constituée en tant que douille de contact (11) avec un compartiment de réception (12), **caractérisé en ce que** le corps de raccord électrique (10) comporte une vanne unidirectionnelle (40) disposée dans le conduit de fluide de refroidissement (30), qui permet un débit de fluide du raccord de fluide de refroidissement (33) dans le conduit de fluide de refroidissement (30) et empêche toutefois un débit de fluide venant du conduit de fluide de refroidissement (30) par le raccord de fluide de refroidissement (33), la vanne unidirectionnelle (40) étant disposée à l'extrémité du conduit de fluide de refroidissement (30) entre le conduit de fluide de refroidissement (30) et le compartiment de réception (12) de la douille de contact (11).

2. Corps de raccord électrique (10) selon la revendication 1, **caractérisé en ce qu'**un compartiment de réception (12) de la douille de contact (11) est relié en fluide au conduit de fluide de refroidissement (30).

3. Corps de raccord électrique (10) selon l'une quelconque des revendications 1 ou 2, **caractérisé en ce que** la douille de contact (11) comporte au moins un évidement longitudinal (15) s'étendant le long d'un axe longitudinal (14) de la douille de contact (11) et jusqu'à une face avant (13) de la douille de contact (11) de telle sorte que la douille de contact (11) comporte au moins deux segments d'enveloppe (16) entourant le compartiment de réception (12) la douille de contact (11).

4. Corps de raccord électrique (10) selon l'une quelconque des revendications précédentes, **caractérisé en ce que** le conduit de fluide de refroidissement (30) comporte un alésage radial (31) s'étendant transversalement à un axe longitudinal (14) du corps de raccord électrique (10).

5. Corps de raccord électrique (10) selon la revendication 4, **caractérisé en ce que** le conduit de fluide de refroidissement (30) comporte en outre un alésage axial (32) s'étendant le long de l'axe longitudinal (14) du corps de raccord électrique (10) et débouchant dans l'alésage radial (31).

6. Connecteur de charge (100) pour couplage à un dispositif de liaison correspondant et pour transmission d'énergie électrique, **caractérisé par** les caractéristiques suivantes :
- le connecteur de charge (100) comporte au moins un corps de raccord électrique (10) disposé dans un boîtier de connecteur de charge (110) selon l'une quelconque des revendications précédentes, la deuxième zone de raccord (20) du corps de raccord électrique (10) étant reliée galvaniquement à un câble de charge (120) et la première zone de raccord (11) du corps de raccord électrique (10) étant accessible par un côté de contact (112) du boîtier de connecteur de charge (110), et
- le conduit de fluide de refroidissement (30) du corps de raccord électrique (10) est relié en fluide à une source de fluide de refroidissement.

7. Connecteur de charge (100) selon la revendication 6, **caractérisé par** les caractéristiques suivantes :
- le boîtier de connecteur de charge (110) est pour l'essentiel étanche au fluide et est de ce fait constitué susceptible d'être sollicité en pression,
- un compartiment intérieur de boîtier de connecteur de charge (111) peut être relié en fluide à une source de fluide de refroidissement, et
- le conduit de fluide de refroidissement (30) du corps de raccord électrique (10) est en liaison de fluide avec le compartiment intérieur du connecteur de charge (111).

8. Connecteur de charge (100) selon la revendication 6, **caractérisé en ce que** le connecteur de charge (100) comporte une conduite de fluide de refroidissement (130) reliée en fluide au raccord de fluide de refroidissement (33), qui peut être reliée en fluide à une source de fluide de refroidissement.

9. Station de charge pour diffuser de l'énergie électrique à un récepteur d'énergie électrique **caractérisée en ce que** la station de charge comporte un connecteur de charge (100) selon l'une quelconque des revendications 6 à 8 et une source de fluide de refroidissement, qui peut être reliée en fluide au conduit de fluide de refroidissement (30) du corps de raccord électrique (10).

10. Station de charge selon la revendication 9, **caractérisée en ce que** la station de charge comporte un connecteur de charge (100) avec les caractéristiques de la revendication 8, la source de fluide de refroidissement étant reliée en fluide à la conduite de fluide de refroidissement (130).
